# EUROPEAN PATENT APPLICATION

(11) **EP 0 956 773 A1**
(43) Date of publication of application: **17.11.1999**
(21) Application number: 98200856.7
(22) Date of filing: 18.03.1998
(51) Int. Cl.: A23B 7/04, A23L 3/36

(54) **Method and apparatus for freezing of suspensions into pellets**

(71) Applicant: Kanhai, Steven, 1180 Brussels (BE)
(72) Inventor: Kanhai, Steven, 1180 Brussels (BE)
(74) Representative: Bird, William Edward

(57) **Abstract**

An apparatus (10) and a method is described for the formation and release of drops (36) of a liquid suspension such as fruit or vegetable juice in a clog free manner. The liquid suspension is fed to a self-cleaning clog-free droplet sprayer (34) which sprays fine droplets of the liquid suspension against the inner wall of a cylinder (35). On this wall the droplets accumulate and slide down to a discharging rim (37) forming drops. The droplet sprayer ((34) may include a rotating vaned conical disk. The discharging rim (37) may include a drop former which may have a special form, e.g. a wavy or serrated edge. The drops 36 are discharged from the rim (37) and are quick frozen in a cryogenic liquid (16).

## Description

The present invention relates to a method and apparatus for freezing of drops or droplets of a liquid suspension, in particular suspensions including floating particles, cells, fibrous, material, fruit pulp or similar, into pellets or granules of the frozen suspension. The present invention also relates to a method and apparatus for the formation of substantially uniform drops or droplets of such a suspension. The present invention also includes a method and apparatus for freezing the substantially uniform drops or droplets into substantially uniform pellets or granules by immersion in, or contact with a cryogenic liquid. The apparatuses and methods in accordance with the present invention are particularly useful for freezing and processing fruit or vegetable juice.

### TECHNICAL BACKGROUND

One known method of processing of fruit or vegetable juice is by freezing it in containers and defrosting these before processing, e.g. bottling. These two process steps are time consuming, because it takes a lot of time to freeze or defrost the material at the centre of the bulk quantities of fruit juice in the container. During this time, which can take some hours, the liquid portion of the fruit juice is susceptible to bacterial growth with a consequent reduction in flavour and quality and a possible health hazard. Fruit juice may be pasteurised before freezing, but this may result in a further loss of natural taste and quality. Furthermore, the installations for freezing the containers require large investments and are only profitable for large quantities of processed juice. These installations are usually fixed constructions and cannot be transported easily from one production region to another. Such installations are therefore usually located in regions with a locally significant fruit production and such regions often have a minimal industrial infrastructure. Such large installations are not suitable for fruit juice production on a smaller and local scale. The same limitations are found with the defrosting process, which requires the location of the defrosting equipment near either a cold storage plant or a bottling plant. Such installations are only profitable for large fruit juice bottling volumes. The handling and transportation of the frozen juice containers between freezing and bottling location is expensive and the cost of the many containers is rather high.

Freezing juice in granular form is known from US 4,265,921 by mixing the juice with and excess of solid carbon dioxide or "dry ice". The known solutions however are often costly, which may make commercialisation difficult. These solutions suffer from the non-solid form of the droplets after their formation and the relative long time before freezing.

The immersion of the droplets in a cryogenic liquid, like liquid nitrogen may provide quick, almost instantaneous individual freezing of the droplet in granules when touching the low-temperature liquid. Such method is known from US 4,655,047 for viscous liquids such as eggs but this known device uses a nozzle for producing the droplets which is not suitable for fruit juice containing fruit pulp. In US 5,126,156 another device is described for freezing eggs and dairy products. This device creates the droplets by feeding the liquid into a chamber above a bath of cryogenic liquid. In the bottom of the chamber holes are arranged through which the liquid drips. With this known method, the holes may become blocked or restricted with fruit pulp. In patent US 4,704,873 a method is described for producing microfine frozen particles, for e.g. juices, by atomisation of the fluid. However, the known device is not suitable for larger granules of suspensions with floating particles, fibrous materials or vegetable cells, like fruit juices. Fruit juice is a suspension of floating fruit cells in the form of fibres or fruit pulp in a liquid which makes the traditional methods of droplet formation inadequate. Typical problems are the difficulty in providing an even distribution of liquid and fruit pulp in each droplet and blocking the apertures of the apparatus. When using nozzles or orifices or other narrowing apertures, the throughput will be reduced by the blockage. Screens do not provide an even distribution liquid and fruit cells for each droplet as in the original liquid. The problems with these methods cannot be solved satisfactorily by vibrating or shaking the screen, apertures or nozzles. Although the above methods of freezing fruit juice or similar suspensions in granules using a cryogenic liquid bath are better than those using dry ice like in US 4,265,921 or cryogenic gases, the quality is still not perfect and capacities are limited.

It is an object of the present invention to provide an apparatus and a method of freezing suspensions into granules or pellets, in particular those suspensions including floating vegetable or fruit cells and/or fibrous materials as known from fruit or vegetable juices whereby it is preferred if the same distribution of solid and liquid is maintained in the frozen granules or pellets as in the original suspension.

It is a further object of the present invention to provide an apparatus and a method for forming and releasing drops or droplets of a suspension, in particular a suspension of floating vegetable or fruit cells and/or fibrous materials in a liquid, such as fruit or vegetable juices, while maintaining the same distribution of solid and liquid in the drops or droplets as in the original suspension.

### SUMMARY OF THE INVENTION

The present invention provides an apparatus for the forming and releasing drops of liquid suspensions, such as fruit or vegetable juices, comprising: a device for feeding the liquid suspension to a droplet sprayer for breaking up the liquid suspension into droplets; and a device for collecting the droplets, for accumulating them into drops, and for discharging the drops.

The present invention also provides a method of forming and releasing drops of liquid suspensions, such as fruit or vegetable juices, comprising the steps of: breaking up the liquid suspension into droplets; collecting the droplets on a substantially vertical surface; accumulating the liquid droplets into liquid drops on said surface; and discharging the liquid drops from said surface.

The invention is especially useful for the fast freezing of fruit or vegetable juices without substantial quality loss, while reducing the cost of packaging and handling. In particular, the frozen granules produced have a composition which is the same as the original liquid suspension.

The dependent claims define individually and particularly further embodiments of the invention. The invention with its embodiment and advantages will be described in the following with reference to the following drawings.

### BRIEF DESCRIPTION OF THE DRAWINGS

Fig 1 is a schematic representation of an apparatus for the cryogenic freezing of suspensions into granules in accordance with an embodiment of the present invention.
Fig. 2 is a detail of the apparatus shown in Fig. 1 showing schematically a device for the dispensing of a liquid suspension into drops in a cryogenic liquid in accordance with the present invention.
Fig. 3 is a schematic representation of another embodiment of a detail of a droplet sprayer for the dispensing into droplets in accordance with the present invention.
Figs. 4 and 5 are schematic representations of other embodiments of a droplet spryer in accordance with the present invention including a drop former.

### DESCRIPTION OF THE ILLUSTRATIVE EMBODIMENTS

In the following the present invention will be described with reference to specific embodiments and with reference to certain drawings but the invention is not limited thereto but only by the claims. The drawings are only schematic representations and are non-limiting. In particular, certain dimensions may be exaggerated for clarity purposes. The present invention will be described with reference to the specific application in fruit juice processing but the invention is not limited thereto. In particular, the present invention may be used with any suspension including fibrous matter or floating vegetable cells or particles in a liquid.

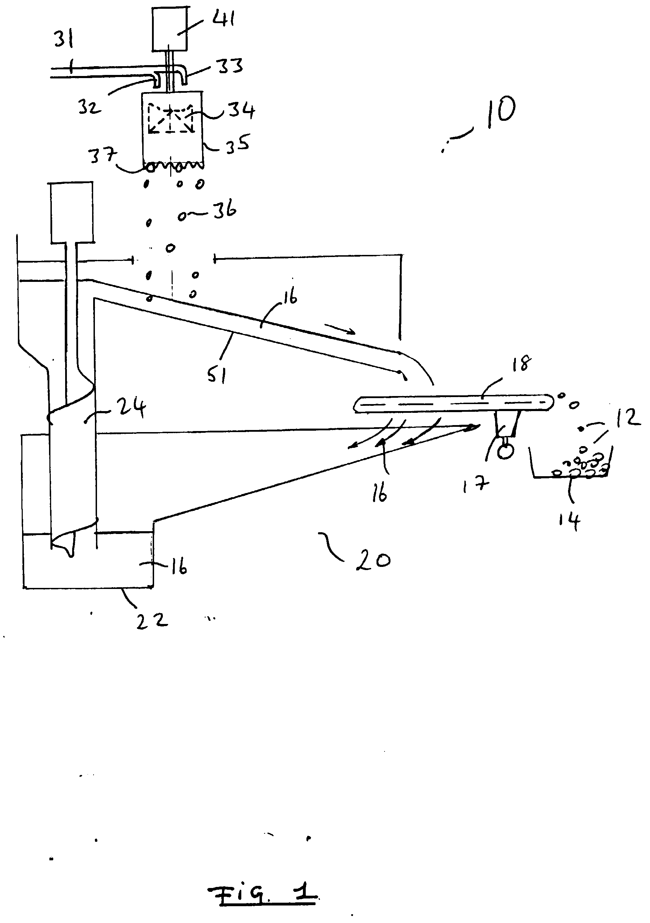

Fig. 1 is a schematic diagram of a part of an apparatus 10 for the cryogenic freezing of suspensions such as fruit juice into granules in accordance with an embodiment of the present invention. Details of the installation including pipework for the cryogenic liquid or for the juice etc. which are not relevant to the present invention are not shown. The apparatus 10 shown in Fig. 1 provides frozen granules 12 of fruit juice at dispensing apparatus 15 ready for packaging in bags, boxes or flexible or non-flexible containers 14 and transporting the frozen juice granules 12 in a frozen condition, preferably below -15°C. The size of the granules 12 is preferably between 0.2 and 1.0 cm, whereby microfine granules are less advantageous for packaging and further handling and processing of the juice. The granules 12 are preferably frozen by immersion in, or contact with a cryogenic liquid 16, like liquid nitrogen, or by contact with a cryogenic subliming solid such as solid carbon dioxide, but cryogenic liquids are preferred. In particular, when the suspension is part of food processing, it is most preferred if the cryogenic liquid 16 is inert such as liquid nitrogen. The immersion or contact can be by sinking or floating on the surface of the cryogenic liquid 16 which may be in a thermally insulated vat, whereby a motion may provided to the cryogenic liquid or not, or it may be in a trough in which the cryogenic liquid flows. Immersion means that the freezing of the granules is mainly executed by the liquid phase of the cryogenic medium. The separation of the granules 12 from the cryogenic liquid 16 is performed by any suitable method or apparatus, e.g. screens, augers or conveyors. In accordance with the present invention the sizes of apparatus 10 is not limited, but the method may find useful application for capacities of a few hundreds up to a few thousand litres per hour. For this capacity, the machine 10 can be a mobile even a portable unit. This is a definite advantage because of the seasonal character and varying location of fruit harvesting and processing.

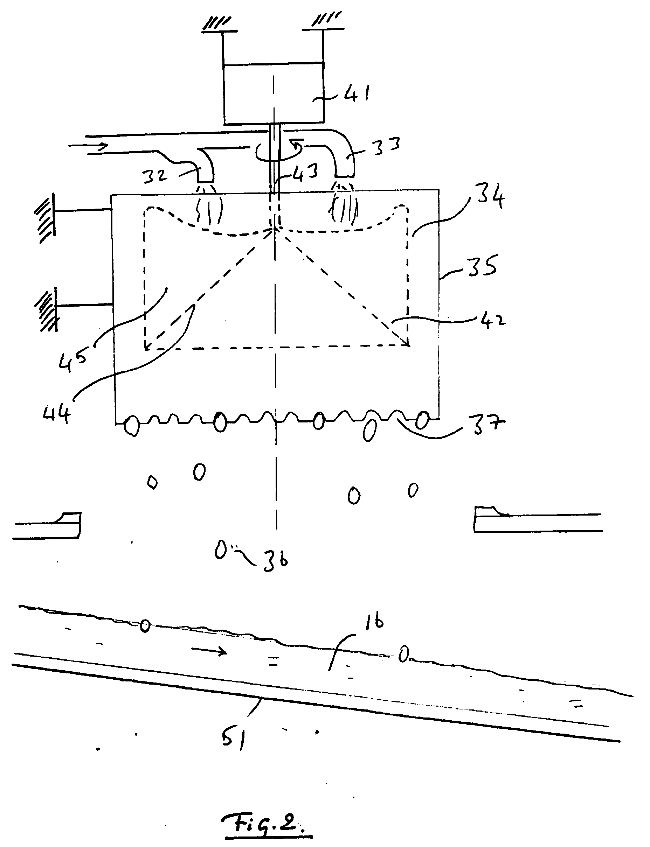

Fig. 2 shows schematically a detail of the apparatus 10 shown in Fig. 1. Fruit juice is fed to and discharged into a drop generator 30 of apparatus 10 via conduit 31 from any suitable source. Before processing, the fruit juice can be stirred or shaken by any suitable method to obtain a substantially uniform distribution of the floating fruit cells or pulp particles in the liquid. This is not shown in Fig. 1. In the drop generator 30, the suspension is first converted into droplets by a droplet sprayer 34 and then accumulated into drops 36 on the lower rim 37 of the outer wall of a cylinder 35. These drops 36 then fall into the cryogenic liquid 16 and are frozen.

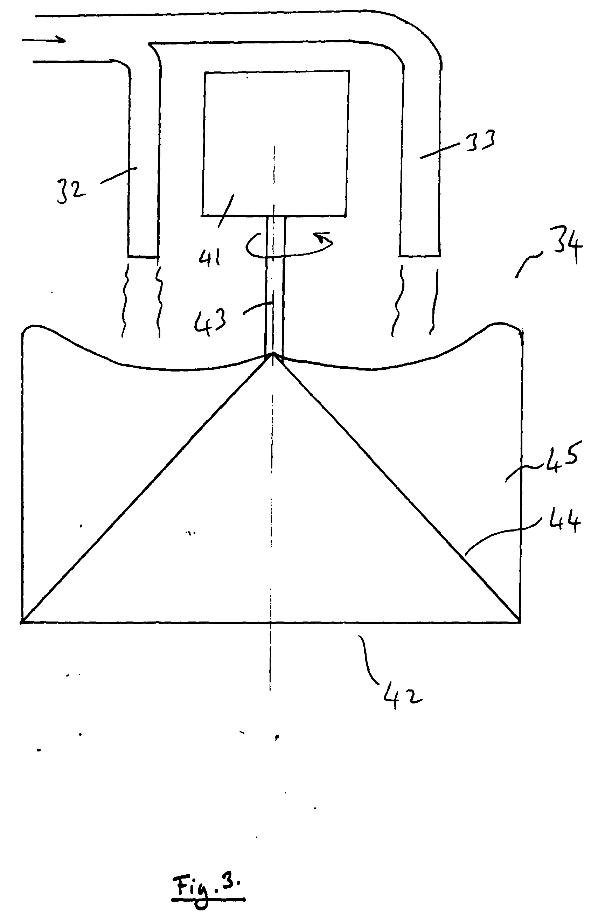

The conduit 31 may be terminated by one or more orifices or openings 32, 33. In Fig. 2 an arrangement with two orifices is shown. A continuous flow through each orifice 32, 33 is preferred in order to prevent settling of solid materials in the suspension. The falling path of the flow from each orifice 32, 33 is intercepted by the droplet sprayer 34 which breaks up the liquid into fine droplets and sprays them horizontally against the inside wall of cylinder 35. It is preferred in accordance with the present invention if the droplet sprayer 34 does not include flow restrictors such as nozzles which may become blocked. Preferred is a rotating disk, or a vibrating device that breaks up the liquid. A specific embodiment of droplet sprayer 34 is shown in Fig. 3 and will be discussed later. The fine droplets impinge on an inner surface of the cylinder 35. The fine droplets flow under gravity to the rim 37. During their travel they may accumulate. The inner surface of cylinder 35 may have various forms or finishes including for, example, a smooth surface, vertical grooves or a non-wetting surface such as Teflon™ or a wetting surface. The preferred embodiment includes a cylinder 35 with straight or tapered walls. In Fig. 2 a cylinder 35 with parallel walls is shown, and the axis of the cylinder 35 collocates with the rotation axis of the droplet sprayer 34. The continuous flow of fruit juice droplets onto the inner surface of cylinder 35 causes any solid particles which adhere to this surface to be flushed downwards so that the drop generator 30 is self-cleaning. The drop generator 30 in accordance with the present invention is preferably clog-free in operation.

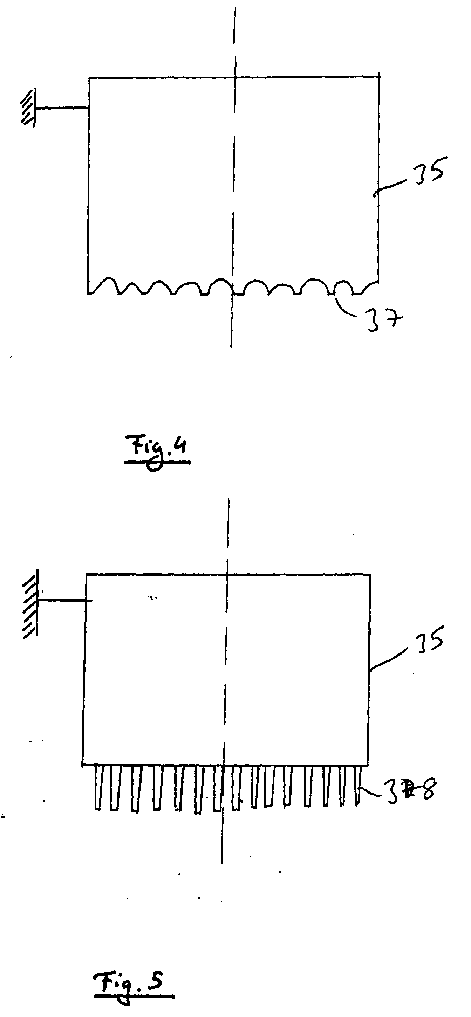

When the droplets, flowing down under gravity and accumulating, reach the lower rim 37, they will tend to congregate there by surface tension forces. When a drop 36 attached at this discharging rim 37 becomes too heavy by accumulation of other droplets, the drop 36 will be released and fall into the cryogenic liquid 16. The discharging rim 37 may be straight or be shaped to include a drop former which assists in generating a particular size of drop or assists in detachment, e.g. the drop former may be include a wavy, crenellated or serrated rim 37 or include protrusions or cusps 38, or needles 39, as shown schematically in three non-limiting examples in Figs. 2, Fig. 4 and Fig. 5. These embodiments of the drop former in accordance with the present invention allow a more predictable size of the released drops 36 without using a hole in a plate nor a nozzle of an atomiser both of which may block. Accordingly, the embodiments of the drop former in accordance with the present invention are clog-free. For instance, in Fig. 4 each groove of the cusped edge will collect a droplet of this specific size, the size can be bigger than with a straight edge as the surface tension forces on the fluid provided by the surrounding cusped form is larger. For the method of freezing juice into granules, these granules are preferably rather large, so the embodiment of Fig. 4 is preferable.

Rim 37 is preferably placed sufficiently far from the cryogenic liquid 16 that it does not freeze up. If necessary a form of heating (e.g. warm air) may be provided (not shown) to keep the temperature of rim 37 above freezing.

Fig. 3 shows a specific embodiment of the droplet sprayer 34, partly in cross-section. It includes a rotating vaned conical device 42, well suited for breaking up suspensions, like fruit juices, and suitable for a typical throughput of about 300 l/h. The capacity of the drop generator 30 depends to an extent on the circumference of the discharge run 37. Hence, for a compact device it is advantageous to maximise the circumference of the discharge rim 37 with respect to the area of the cylinder 35. The area of the cylinder 35 is proportional to the square of the radius whereas the circumference of rim 37 is proportional only to the radius so that it is more economical to use several small diameter cylinders 35 rather than one large one. The cone 44 is rotated by a suitable drive mechanism 41 via shaft 43. Attached to cone 44 are a plurality of substantially vertical vanes 45 which are distributed around the cone 44. Vanes 45 may be inclined to the vertical. The flow of liquid from orifices 32 and 33 is cut by the rotating vanes 45 and is splashed into fine droplets on the rotating cone 44. The cone 44 is preferably large enough to prevent the feed of liquid suspension from dropping directly into the cryogenic liquid 16. Any liquid which strikes the cone 44 first is driven by centrifugal forces outwards and sideways against the following vane 45. Due to the spraying action over an angle it is preferred if outer portions of the vanes 45 are higher than the more central portions. Due to the continuous flow of liquid suspension from orifices 32 and 33, cone 44 and vanes 45 are self-cleaning. Alternative droplet spraying equipment may be included within the present invention, for example a rotating propeller may be a suitable replacement for the cone 44 described above.

Drops 36 fall towards the freezing unit 20. This may be a bath of cryogenic liquid however it is preferred if the surface of the cryogenic liquid 16 is in motion. For example, freezing unit 20 may include a trough 51 along which flows a cryogenic liquid, e.g. liquid nitrogen at a depth of 1 to 3 cm. The droplets 36 of the suspension fall into the liquid 16 from a height of about 5 to 15 cm above the liquid 16. The flow of cryogenic liquid may be between 0.1 and 0.5 m/s. The length of the trough 51 is chosen so that the frozen drops 12 remain in the liquid 16 for about 1 to 15 seconds.

The cryogenic liquid 16 and the frozen granules 12 discharge from the end of the trough 51 into a granule/cryogenic liquid separator, e.g. a screen or mesh 18 which is part of the dispensing unit 15. Mesh 18 may be vibrated by a vibrator 17 so that the frozen pellets 12 fall onto a conveyor or directly into transport containers 14. The cryogenic liquid separated from the granules 12 flows down to a reservoir 22 from which it is pumped upwards by means of an impeller 24. Liquid 16 flows over into trough 51 from the top of impeller 24.

The frozen drops 12 produced by the above embodiments of the present invention are relatively solid so that form-stable packaging, e.g. metal, wooden or plastics drums, vessels or containers is not required. This reduces the cost of the packaging used with for transport of the granules 12. As the bottling plants may be in industrialised nations whereas the juice production may be in agrarian nations, the difficulty and cost in cleaning and shipping expensive containers over long distances can be eliminated with the present invention. Both freezing and de-freezing are quick so that the development of bacteria is reduced and the processing times and costs are reduced. Further, quality is high. For example, pre-pasteurising is no longer required. The granules 12 can be removed from the transport packaging and defrozen without crushing. The freezing equipment 10 in accordance with the present invention may be transportable and therefore there is no need to set up fixed freezing plants. Instead the transportable freezing equipment 10 of the present invention may be moved from one harvesting area to another provided cryogenic liquid is available.

While the invention has been shown and described with reference to preferred embodiments, it will be understood by those skilled in the art that various changes or modifications in form and detail may be made without departing from the scope and spirit of this invention as defined in the attached claims.

## Claims

1. An apparatus for the forming and releasing drops of liquid suspensions, such as fruit or vegetable juices, comprising:
a device for feeding the liquid suspension to a droplet sprayer for breaking up the liquid suspension into liquid droplets; and
a device for collecting the liquid droplets, for accumulating them into liquid drops, and for discharging the liquid drops.

2. An apparatus according to claim 1 wherein, said droplet sprayer includes a rotating disk which intercepts the feed of the liquid suspension.

3. An apparatus according to claim 2, wherein said rotating disk has a conical form.

4. An apparatus according to claim 2 or 3 wherein said rotating disk includes vanes.

5. An apparatus according to any of claims 1 to 4, wherein said collecting device includes a surface surrounding said droplet sprayer for collecting the liquid droplets.

6. An apparatus according to claim 5, wherein said surface has a straight-sided or tapered substantially cylindrical form.

7. An apparatus according to claim 5 or 6, wherein a drop former is provided on a discharging rim of said surface.

8. An apparatus according to claim 7, wherein said drop former includes the discharging rim of said surface having a crenellated or serrated form or being provided with needles, cusps or protrusions.

9. An apparatus according to any of claims 1 to 8, further comprising a freezing unit for freezing the discharged liquid drops.

10. A method of forming and releasing drops of liquid suspensions, such as fruit or vegetable juices, comprising the steps of:
breaking up the liquid suspension into droplets;
collecting the droplets on a substantially vertical surface;
accumulating the liquid droplets into liquid drops on said surface; and
discharging the liquid drops from said surface.

11. A method according to claim 10, wherein said accumulating step includes accumulating the liquid drops to substantially the same size.

12. A method according to claim 10 or 11, further comprising the steps of:
individual quick freezing of the discharged liquid drops by immersion in, or
contact with a cryogenic liquid; and
collecting the frozen drops.
